# FASCICULE DE BREVET EUROPEEN

(11) **EP 2 731 221 B1**
(45) Date de publication et mention de la délivrance du brevet: **19.09.2018**
(21) Numéro de dépôt: 13191994.6
(22) Date de dépôt: 07.11.2013
(51) Int. Cl.: H02J 3/14, H02J 13/00

(54) **DISPOSITIF INTERMÉDIAIRE DE GESTION D'ÉNERGIE ET PROCÉDÉ DE GESTION D'ÉNERGIE ASSOCIÉ**
ZWISCHENVORRICHTUNG ZUM ENERGIEMANAGEMENT UND MANAGEMENTVERFAHREN DER ENTSPRECHENDEN ENERGIE
INTERMEDIATE DEVICE FOR POWER MANAGEMENT AND RELATED POWER-MANAGEMENT METHOD

(30) Priorité: 09.11.2012 FR 1260647
(43) Date de publication de la demande: 14.05.2014
(73) Titulaire: Schneider Electric Industries SAS, 92500 Rueil-Malmaison (FR)
(72) Inventeur: Lebeau, Bernard, 38190 Les Adrets (FR)
(74) Mandataire: Lavoix

(56) Documents cités:
- EP-A1- 2 270 948
- WO-A1-2004/023624
- WO-A1-2010/031012
- US-A1- 2005 207 081

## Description

La présente invention concerne un dispositif intermédiaire de gestion d'énergie et un procédé de gestion d'énergie associé.

L'invention se situe dans le domaine de la gestion d'énergie consommée dans le résidentiel, chez des abonnés recevant de l'énergie électrique d'un distributeur d'énergie électrique pour alimenter divers appareils électriques.

Dans un réseau électrique, il est connu d'effectuer un délestage consistant à arrêter ou à diminuer volontairement l'approvisionnement de certains appareils pour rétablir l'équilibre entre la production d'énergie d'électrique et la consommation d'énergie électrique dans le réseau. Le délestage est effectué par des dispositifs de délestage.

Les dispositifs de délestage sont aptes à recevoir des informations relatives à la consommation électrique, en provenance du compteur électrique installé dans la résidence de l'abonné. Par exemple, dans le cas du distributeur Electricité de France (EDF), le compteur électrique comporte une sortie d'informations numériques, émises selon un protocole appelé télé-information client (TIC), qui est défini dans la spécification technique ERDF-NOI-CPT-02E. Les informations fournies regroupent des informations relatives à l'abonnement souscrit, par exemple la puissance et l'intensité souscrite, et des informations relatives à la consommation instantanée ou au dépassement de la puissance souscrite. Ces informations, appelées plus généralement informations de gestion, sont transmises via un bus de télé-information de manière cyclique vers un lecteur, qui est par exemple un dispositif de délestage.

Lors de la réception d'un avertissement de dépassement de la puissance souscrite, un dispositif de délestage met hors service une ou plusieurs charges connectées à sa sortie, par exemple des radiateurs, afin d'éviter le déclenchement du disjoncteur de branchement ou d'arrivée. Un dispositif de délestage gère plusieurs appareils électriques, appelés également charges, la gestion consistant à envoyer des ordres de délestage si nécessaire. Divers algorithmes de délestage, par exemple le délestage en cascade ou cyclique, sont connus. Ainsi, l'utilisation de gestionnaires d'énergie permet d'augmenter l'efficacité énergétique au niveau résidentiel, et également d'éviter des surcharges globales du réseau électrique, par exemple en période de pointe en cas de forte surconsommation électrique.

La demande de brevet EP2270948 A1 décrit un procédé et dispositif d'effacement et d'anticipation de la consommation d'une installation électrique, le dispositif d'effacement et d'anticipation étant branché à un dispositif de délestage de l'installation électrique.

La demande de brevet US20050207081 décrit un système de gestion de puissance dans une installation électrique.

Cependant, une résidence est en général équipée d'un seul dispositif de délestage, qui a un nombre de sorties limité défini lors de la conception/fabrication, et par conséquent le nombre d'appareils électriques gérés est également limité. Or, avec les habitudes de consommation actuelles, le nombre d'appareils électriques utilisés en résidentiel est variable et en augmentation.

Il serait utile de permettre la gestion énergétique d'un nombre variable d'appareils électriques sans avoir besoin de changer de dispositif de délestage lors de l'introduction de nouveaux appareils.

On peut envisager l'introduction de deux ou plusieurs dispositifs de délestage connus en parallèle, mais une telle utilisation ne serait pas totalement efficace en matière de gestion de la consommation par rapport à la puissance souscrite. En effet, des dispositifs de délestage fonctionnant en parallèle sont indépendants l'un de l'autre, et donc une information de dépassement de la puissance souscrite entraînerait la mise en oeuvre de plusieurs coupures d'alimentation d'appareils électriques en parallèle.

De plus, avec en particulier l'avènement des véhicules électriques, le besoin de connecter de nouvelles charges de forte puissance tout en profitant efficacement de l'abonnement souscrit augmente.

A cet effet, l'invention propose, selon un premier aspect, un dispositif intermédiaire de gestion d'énergie, apte à être ajouté dans une installation électrique comportant un compteur électrique et au moins un dispositif de délestage apte à délivrer des ordres de délestage à des appareils électriques de ladite installation selon des informations de gestion obtenues à partir du compteur électrique. Le dispositif selon l'invention comporte :
- un moyen d'obtention d'informations de gestion entrantes conformes à un format d'informations prédéterminé à partir du compteur électrique,
- au moins deux voies de sortie, au moins une des voies de sortie étant apte à être connectée à un dispositif de délestage, chaque voie de sortie ayant un niveau de priorité associé, au moins une autre des voies de sortie étant apte à être connectée soit à un autre dispositif de délestage, soit à un appareil électrique apte à recevoir des ordres de délestage, soit à un autre dispositif intermédiaire de gestion d'énergie,
- un moyen de génération d'informations de gestion de sortie associées respectivement à chaque voie de sortie, à partir des informations de gestion entrantes et des niveaux de priorité associés, lesdites informations de gestion de sortie étant conformes au même format prédéterminé, le dispositif intermédiaire comportant, lorsqu'une des voies de sortie est apte à être connectée à un appareil électrique, des moyens de génération d'au moins un ordre de délestage à partir desdites informations de gestion de sortie associées à ladite voie de sortie connectée directement à un appareil électrique et des moyens d'envoi dudit au moins un ordre de délestage généré.

Avantageusement, un dispositif intermédiaire de gestion de l'énergie selon l'invention est compatible avec des dispositifs de délestage existants qui n'ont pas besoin d'être modifiés et continuent à fonctionner de manière standard, comme lorsqu'ils sont connectés directement au compteur électrique. De plus, le dispositif intermédiaire de gestion d'énergie proposé permet de gérer une attribution de priorité entre divers appareils connectés, permettant ainsi de gérer efficacement la consommation d'énergie en cas d'ajout d'une charge particulièrement consommatrice comme un véhicule électrique.

Le dispositif intermédiaire de gestion d'énergie peut également présenter une ou plusieurs des caractéristiques récitées dans les revendications dépendantes, prises indépendamment ou en combinaison.

Selon un deuxième aspect, l'invention concerne un procédé de gestion d'énergie, mis en oeuvre par un dispositif intermédiaire de gestion d'énergie tel que brièvement décrit ci-dessus, comportant au moins deux voies de sortie, ayant chacune un niveau de priorité associé. Le procédé comporte les étapes de :
- réception d'informations de gestion destinées à une première voie de sortie d'un premier niveau de priorité,
- génération à partir des informations de gestion reçues d'une information de gestion modifiée destinée à une deuxième voie de sortie ayant un deuxième niveau de priorité inférieur audit premier niveau de priorité, comprenant une information apte à déclencher un délestage d'un appareil électrique connecté, via un dispositif de délestage ou directement, sur ladite deuxième voie de sortie, avant tout délestage d'un appareil électrique connecté à ladite première voie de sortie.

Le procédé de gestion d'énergie selon l'invention peut également présenter une ou plusieurs des caractéristiques ci-dessous, prises indépendamment ou en combinaison :
- il comporte les étapes de :
   - mémorisation de ladite information de gestion modifiée destinée à une deuxième voie de sortie ayant un deuxième niveau de priorité, et
   - génération d'une autre information de gestion modifiée à partir de ladite information de gestion mémorisée destinée à une troisième voie de sortie de troisième niveau de priorité inférieur audit deuxième niveau de priorité ;
- il comporte une étape d'affectation d'une information de gestion de sortie à chaque voie de sortie du dispositif gestionnaire d'énergie ;
- il comporte les étapes de :
   - obtention, à partir des informations de gestion reçues, d'une information relative à une valeur d'intensité instantanée consommée,
   - comparaison de ladite valeur d'intensité instantanée à une première valeur de seuil, et
   - si la valeur d'intensité instantanée dépasse ladite première valeur de seuil, génération d'une information de gestion modifiée destinée à une voie de sortie non prioritaire ;
- il comporte en outre les étapes de :
   - comparaison de ladite valeur d'intensité instantanée à une deuxième valeur de seuil, et
   - si la valeur d'intensité instantanée est inférieure à ladite deuxième valeur de seuil, modification d'une valeur d'intensité allouée à la voie de sortie non prioritaire.

Selon un troisième aspect, l'invention concerne une installation électrique comportant un compteur électrique et au moins un dispositif de délestage apte à délivrer des ordres de délestage à des appareils électriques de ladite installation selon des informations de gestion obtenues à partir du compteur électrique, l'installation comportant un dispositif intermédiaire de gestion d'énergie tel que brièvement décrit ci-dessus branché en série entre le compteur électrique et ledit au moins un dispositif de délestage.

D'autres caractéristiques et avantages de l'invention ressortiront de la description qui en est donnée ci-dessous, à titre indicatif et nullement limitatif, en référence aux figures annexées, parmi lesquelles :
- la figure 1 représente schématiquement une installation électrique comportant un dispositif intermédiaire de gestion d'énergie selon un premier mode de réalisation l'invention ;
- la figure 2 représente schématiquement une installation électrique comportant un dispositif intermédiaire de gestion d'énergie selon un deuxième mode de réalisation l'invention ;
- la figure 3 représente schématiquement une installation électrique comportant un dispositif intermédiaire de gestion d'énergie selon un troisième mode de réalisation l'invention ;
- la figure 4 est un organigramme des étapes d'un procédé de gestion d'énergie selon un mode de réalisation de l'invention, mis en oeuvre par un dispositif intermédiaire de gestion d'énergie à deux sorties ;
- la figure 5 représente des courbes des dispositifs de délestage gérés par le dispositif intermédiaire dans un exemple de réalisation ;
- la figure 6 représente schématiquement une installation électrique comportant un dispositif intermédiaire de gestion d'énergie comportant une pluralité de voies de sorties, et
- la figure 7 est un organigramme des étapes d'un procédé de gestion d'énergie selon un mode de réalisation de l'invention, mis en oeuvre par un dispositif intermédiaire à n sorties.

L'invention sera décrite ci-après dans sa mise en oeuvre dans une installation électrique d'un abonné à un réseau de distribution qui fournit des informations de type télé-information, selon un protocole de formatage prédéfini. Ces informations seront appelées par la suite informations de gestion.

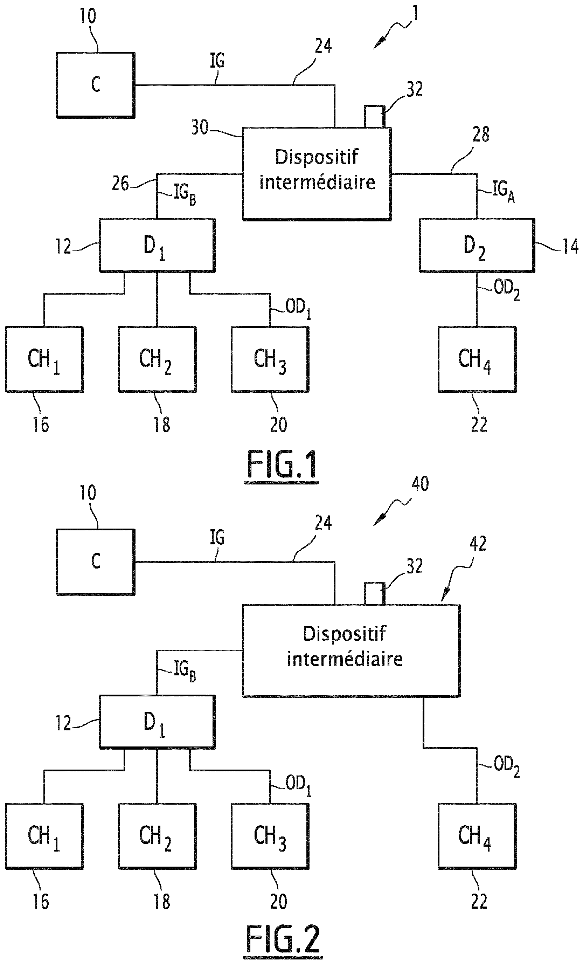

La figure 1 représente schématiquement une installation électrique 1 chez un abonné d'un distributeur d'électricité.

L'installation électrique 1 comporte un compteur électrique 10, et deux dispositifs de délestage, numérotés respectivement 12 pour le premier dispositif de délestage (noté D1 sur la figure 1) et 14 pour le deuxième dispositif de délestage (noté D2 sur la figure 1).

Le premier dispositif de délestage 12 a trois appareils électriques CH1, CH2, CH3 référencés respectivement 16, 18, 20 qui sont connectés à sa sortie. Ces appareils électriques sont typiquement des appareils électriques à forte consommation, par exemple radiateurs électriques, chauffe-eau.

Le deuxième dispositif de délestage 14 a un appareil consommateur ou charge CH4 référencé 22 connecté à sa sortie. Dans un mode de réalisation, la charge 22 est une charge à forte consommation de puissance, par exemple un véhicule électrique, qui n'est connecté que temporairement pour des périodes de rechargement.

Le compteur électrique 10 fournit des informations de gestion entrantes IG, selon un protocole prédéfini qui est le protocole TIC dans cet exemple. Les informations de gestion classiques sont transmises sur un bus de communication 24 dit bus de télé-information. Ce bus 24 est par exemple un câble multipaire avec une paire torsadée. Un signal modulé à 10 kHz est transmis sur ce bus, comportant des trames qui sont émises les unes après les autres en continu. Ces trames contiennent des informations de gestion présentes dans la mémoire du compteur électrique 10. La longueur des trames dépend du type de contrat souscrit par l'abonné. Une trame comprend un caractère de début de trame qui est un caractère réservé, un groupe d'informations et un caractère de fin de trame qui est également un caractère réservé.

Le groupe d'informations comprend un champ étiquette et un champ donnée, qui fournit une valeur associée au champ étiquette. Par exemple, de manière non exhaustive, les principales étiquettes comprennent l'option tarifaire OPTARIF, l'intensité souscrite ISO, l'intensité instantanée IINST, l'intensité maximale IMAX, la puissance apparente PAPP. Les étiquettes comprennent aussi des informations relatives aux heures creuses/heures pleines permettant de gérer l'énergie consommée en fonction de l'abonnement souscrit et des heures de la journée. De plus, le groupe d'informations peut aussi comprendre une information ADPS qui est un avertissement de dépassement de la puissance souscrite, qu'on appellera également message ADPS.

Les dispositifs de délestage 12, 14 sont adaptés à recevoir et à interpréter les informations de gestion issues du compteur électrique 10, en particulier les informations ADPS : en cas de réception d'une information ADPS, un dispositif de délestage envoie une ou des commandes de délestage sur les voies de sortie aux charges branchées en sortie. Chaque dispositif de délestage applique un procédé de délestage prévu par son fabricant, par exemple un délestage en cascade, dans un ordre prédéterminé des appareils branchés en sortie, ou un délestage cyclique, dans lequel les commandes de délestage sont envoyées sans ordre prédominant.

L'installation 1 selon l'invention comporte, en plus des dispositifs de délestage connus, un dispositif intermédiaire 30, de gestion d'énergie, appelé simplement dispositif intermédiaire dans la suite de la description, qui est branché entre le compteur électrique 10 et les dispositifs 12, 14. Le dispositif intermédiaire 30 est apte à recevoir les informations de gestion IG du compteur via le bus de communication 24 et à les transformer en informations de gestion de sortie destinées aux divers dispositifs branchés en sortie, en tenant compte d'une priorité qui est associée à chacune de ses voies de sortie 26, 28.

Le dispositif intermédiaire 30 comporte des moyens 32 d'attribution d'une priorité aux voies de sortie, et par conséquent aux équipements branchés sur ces voies de sortie, qu'ils soient des dispositifs de délestage comme dans l'exemple de la figure 1 ou d'autres appareils existants aptes à recevoir et interpréter des informations de gestion selon le protocole TIC pour effectuer un délestage.

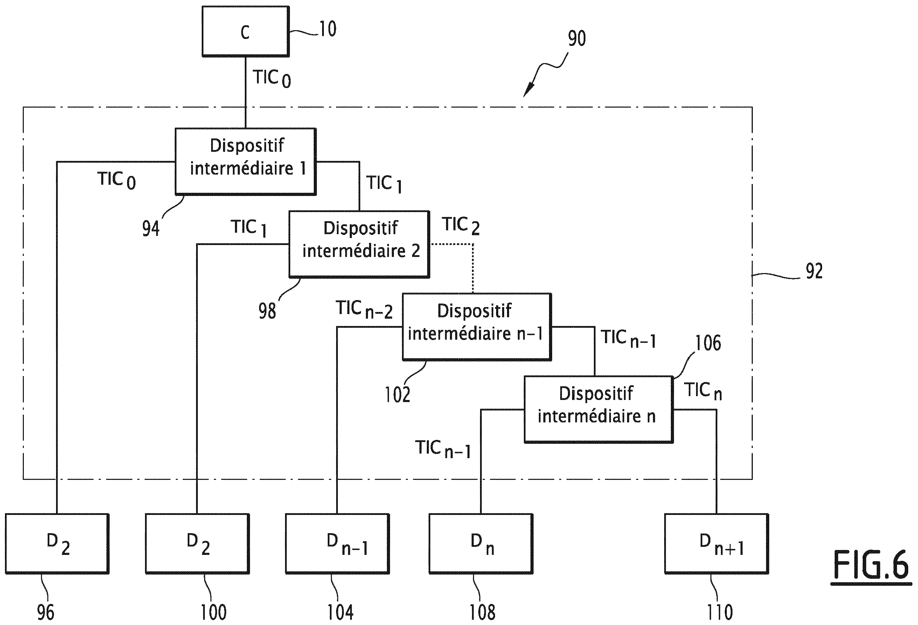

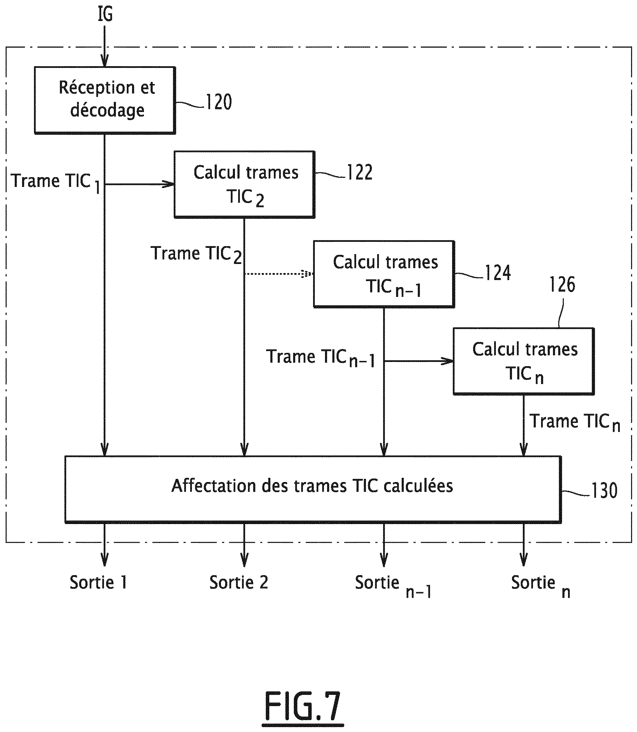

Dans l'exemple de la figure 1 le dispositif intermédiaire 30 comporte une voie d'entrée et deux voies de sortie. Bien entendu, cet exemple est non limitatif et un plus grand nombre de voies de sortie, chaque voie de sortie ayant un niveau de priorité associé, est envisageable, comme expliqué ci-après en référence aux figures 6 et 7.

Les moyens d'attribution de priorité 32 sont actionnables par un utilisateur ou programmables par un opérateur au moment d'une maintenance de l'installation électrique 1 par exemple.

Les moyens d'attribution de priorité 32 sont par exemple des moyens de réception d'un signal de commande, transmis par exemple par radiofréquences. De préférence, le signal de commande peut être envoyé par un utilisateur à distance, au moyen d'un boîtier de télécommande.

En variante, les moyens d'attribution de priorité 32 sont transmis par une liaison filaire, commandée à distance par exemple par un système de commande centralisé de type système domotique.

Selon une autre variante, les moyens d'attribution de priorité 32 sont mis en oeuvre par un commutateur manuel placé directement sur un boîtier contenant le dispositif intermédiaire 30.

La priorité attribuée est modifiable en fonction de l'usage des appareils électriques au cours de la journée. Ainsi, un dispositif de délestage peut être prioritaire à un moment de la journée et pas à un autre. Par exemple, les appareils électriques de type radiateur servant au chauffage sont prioritaires pendant la journée et non prioritaires pendant la nuit, alors qu'à l'inverse, la charge d'un véhicule électrique est non prioritaire pendant la journée mais prioritaire pendant la nuit.

A partir d'une information de dépassement de la puissance souscrite ADPS, le dispositif intermédiaire 30 est apte à générer deux informations de gestion de sortie, selon le même protocole et donc directement interprétables sans aucun changement par chacun des gestionnaires d'énergie, une information de gestion IG_{A} destinée à la voie de sortie prioritaire selon l'attribution de priorité par les moyens 32, par exemple la voie 28, et une information de gestion IG_{B} destinée à la voie de sortie non prioritaire selon l'attribution de priorité par les moyens 32, par exemple la voie 26. Pour ce faire, un dispositif intermédiaire selon l'invention comporte des moyens de calcul numérique, par exemple une unité centrale, et de moyens de mémorisation de paramètres.

Le mode de réalisation illustré à la figure 1 présente un dispositif intermédiaire comportant une voie d'entrée et deux voies de sortie, un dispositif de délestage étant branché sur chaque voie de sortie.

Un deuxième mode de réalisation est représenté à la figure 2. Dans cette figure 2 est représentée une installation électrique 40 similaire à l'installation électrique 1 de la figure 1. Les numéros de référence sont conservés pour les éléments communs avec l'installation de la figure 1.

Dans ce deuxième mode de réalisation, seul un dispositif de délestage 12 est branché en sortie du dispositif intermédiaire 42.

Le dispositif intermédiaire 42, de manière analogue au dispositif intermédiaire 30 de la figure 1, est apte à générer, à partir d'une information de gestion en entrée reçue du compteur électrique, deux informations de gestion modifiées selon les priorités attribuées aux voies de sortie via les moyens d'attribution de priorité 32. Par ailleurs, la charge 22 est branchée directement sur une voie de sortie du dispositif intermédiaire 42 dans ce mode de réalisation, qui est une sortie directe (ou sortie « tout ou rien »). Le dispositif intermédiaire 42 comporte dans ce cas des moyens de génération d'ordres de délestage OD2, fonction des priorités attribuées et des informations de gestion entrantes IG obtenues du compteur électrique, à envoyer à l'appareil électrique 22. Ainsi, le dispositif intermédiaire génère des ordres de délestage OD2 analogues à des ordres de délestage OD2 générés par un dispositif de délestage classique, comme le dispositif 14 de la figure 1.

Selon une variante, plusieurs sorties directes destinées à des appareils électriques ou charges à brancher directement sur le dispositif intermédiaire sont prévues.

Selon une autre variante, les ordres de délestage OD2 sont envoyés à des dispositifs physiquement indépendants, et reliés au dispositif intermédiaire 42 par radiofréquence.

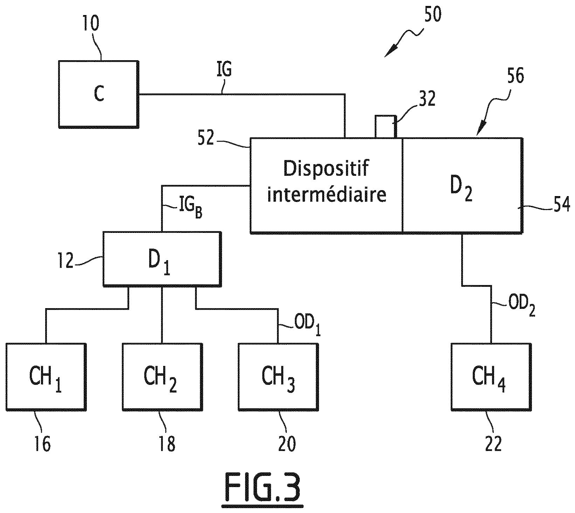

Un troisième mode de réalisation est représenté à la figure 3. Dans cette figure est représentée une installation électrique 50 similaire à l'installation électrique 1 de la figure 1. Les numéros de référence sont conservés pour les éléments communs avec l'installation de la figure 1.

Dans ce troisième mode de réalisation, le dispositif intermédiaire 52 est intégré avec un dispositif de délestage classique 54 dans un boîtier unique 56.

Dans ce mode de réalisation, le dispositif intermédiaire 52 est analogue au dispositif intermédiaire 30 décrit en référence à la figure 1, qui modifie des informations de gestion IG reçues en entrée, et génère des informations de gestion de sortie IG_{A}, IG_{B}, en fonction des priorités attribuées. Le dispositif de délestage 54 est analogue au dispositif de délestage 14 de la figure 1, à la seule différence qu'il est intégré avec le dispositif intermédiaire 52 et il reçoit directement les informations de gestions IG_{A}, par exemple au moyen d'un bus interne.

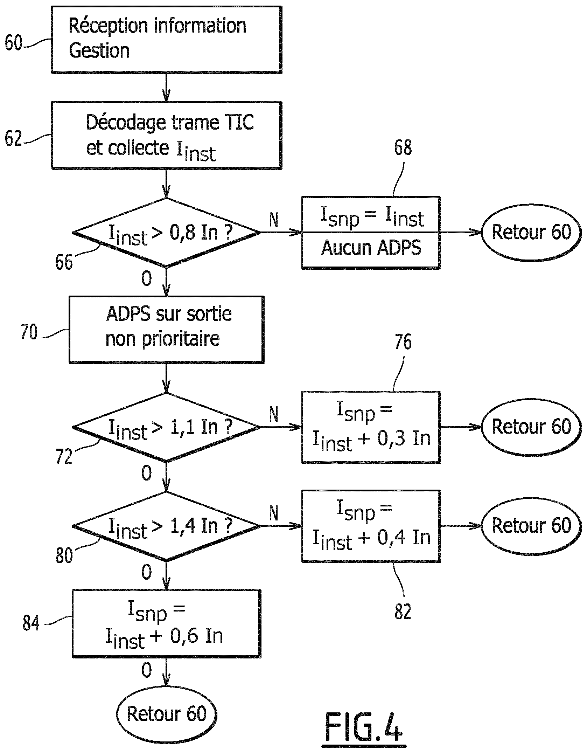

Les principales étapes d'un procédé de gestion d'énergie selon un premier mode de réalisation de l'invention, mis en oeuvre par un dispositif intermédiaire apte à transmettre des informations de gestion sur une voie de sortie prioritaire et des informations de gestion modifiées sur une voie de sortie non prioritaire tel que décrit ci-dessus en référence aux figures 1 à 3, sont illustrées dans la figure 4 pour un mode de réalisation de l'invention.

Dans ce mode de réalisation, les informations de gestion de sortie associées à la voie prioritaire sont les informations de gestion entrantes non modifiées. Les informations de gestion de sortie associées à une voie non prioritaire sont modifiées comme détaillé ci-après.

Lors d'une première étape 60, le dispositif intermédiaire reçoit des informations de gestion IG, qui sont constituées par un signal selon le protocole de télé-information client TIC, qui comporte des trames successives.

L'étape 60 est suivie d'une étape 62 de décodage de la trame TIC reçue et de collecte de la valeur d'intensité instantanée consommée Iᵢₙₛₜ. La trame TIC reçue est transmise, sans aucune modification, sur la voie de sortie prioritaire. A l'étape suivante 66 il est vérifié si la valeur Iᵢₙₛₜ est supérieure strictement à une première valeur de seuil α₁xIₙ, Iₙ étant l'intensité du branchement, avec α₁=0,8 dans cet exemple de réalisation.

En cas de réponse négative, le paramètre de Iₛₙₚ représentatif de l'intensité allouée à la voie de sortie non prioritaire est également mis à Iᵢₙₛₜ à l'étape 68, et aucune information de gestion modifiée n'est envoyée sur les voies de sortie respectives, donc en particulier aucun message d'avertissement de dépassement de la puissance souscrite (ADPS) n'est envoyé.

L'étape 68 est suivie par un retour à l'étape 60.

En cas de réponse positive à l'étape 66, cette étape est suivie d'une étape 70 d'envoi d'une information de gestion contenant un message ADPS sur la voie de sortie non prioritaire. Comme déjà expliqué ci-dessus, ce message est bien au format TIC, afin d'être traité directement par un dispositif de délestage qui est adapté à recevoir des informations en format TIC d'un compteur d'énergie. L'envoi de cette information de gestion provoque le délestage d'une des charges branchées en sortie du dispositif de délestage branché sur la sortie non prioritaire.

L'étape 70 est suivie d'une étape 72 de comparaison de la valeur d'intensité instantanée Iᵢₙₛₜ à une deuxième valeur de seuil α₂x Iₙ, avec α₂=1,1.

Si la valeur Iᵢₙₛₜ est inférieure à 1,1 x Iₙ, c'est-à-dire que la relation suivante est vérifiée: 0,8×*Iₙ* < *Iᵢₙₛₜ* < 1,1×*Iₙ*, l'étape 72 est suivie d'une étape 76 dans laquelle la valeur d'intensité attribuée à la sortie non prioritaire est mise à Iᵢₙₛₜ +β₁xIₙ, avec β₁=0,3. L'étape 76 est suivie du retour à l'étape 60 déjà décrite.

Si, au contraire, la valeur Iᵢₙₛₜ est supérieure à 1,1 x Iₙ, l'étape 72 est suivie d'une étape 80 de comparaison de Iᵢₙₛₜ à une troisième valeur de seuil α₃xIₙ, avec α₃=1,4. Par ailleurs, dès que la valeur Iᵢₙₛₜ est supérieure à 1,1 x Iₙ, une information de gestion contenant un message ADPS est transmis sur la voie non prioritaire.

En cas de comparaison négative à l'étape 80, donc si la valeur Iᵢₙₛₜ est inférieure à α₃xIₙ, l'étape 80 est suivie d'une étape 82 de mise à jour de l'intensité attribuée à la sortie non prioritaire : Iₙₛₚ=Iᵢₙₛₜ +β₂xIₙ, avec β₂=0,4. L'étape 82 est suivie d'un retour à l'étape 60.

En cas de comparaison positive, donc si Iᵢₙₛₜ est supérieure à α₃xIₙ, l'intensité de la sortie non prioritaire est ajustée lors d'une étape 84 à Iᵢₙₛₚ=Iᵢₙₛₜ +β₃xIₙ, avec β₃=0,6.

L'étape 84 est suivie d'un retour à l'étape 60 déjà décrite.

Dans ce mode de réalisation, les informations de gestion IG reçues du compteur électrique, qui sont constituées de trames selon le protocole de télé-information client TIC, sont transmises directement sur la voie de sortie prioritaire, alors que des informations de gestions modifiées sont transmises sur la voie non prioritaire, afin de provoquer un délestage dès que Iᵢₙₛₜ dépasse une valeur calculée par rapport à Iₙ.

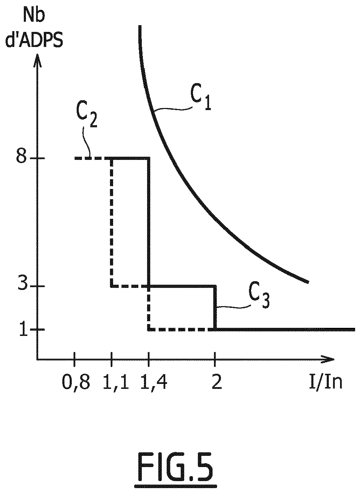

La figure 5 représente un graphe qui montre des courbes de délestage du dispositif de délestage prioritaire et du dispositif de délestage non prioritaire, avec les valeurs numériques des paramètres données ci-dessus en référence à la figure 4. Le graphe comprend en abscisse une valeur représentative de l'intensité instantanée normalisée par la valeur Iₙ, et en ordonnée le nombre de messages ADPS reçus dans les informations de gestion IG provenant du compteur électrique. Une courbe C₁ de disjoncteur est également représentée dans ce graphe.

La courbe C₂ de délestage du dispositif de délestage non prioritaire est représentée en traits pointillés, et la courbe C₃ de délestage du dispositif de délestage prioritaire est représentée en trait plein. Chaque courbe représente la mise en oeuvre du délestage en fonction de la valeur normalisée de l'intensité Iᵢₙₛₜ/Iₙ.

Diverses variantes de mise en oeuvre de la présente invention sont envisageables. En particulier, des valeurs particulières des paramètres α₁, α₂, α₃ et β₁, β₂, β₃ du procédé de gestion d'énergie mis en oeuvre par un dispositif intermédiaire selon l'invention ont été données, mais d'autres valeurs de paramètres sont envisageables, respectant les conditions 0 < *α*₁ < *α*₂ < *α*₃ et 0 < *β*₁ < *β*₂ < *β*₃ avec, *β*₁ = *α*₂ - *α*₁, *β*₂ = *α*₃ - *α*₂ et *α*₃ + (*n* - 1) · *β*₃ ≤ 2 où n est le nombre total de sorties TIC.

La figure 6 illustre une installation électrique 90 comportant n dispositifs intermédiaires tels que décrits en références aux figures 1 à 3, permettant ainsi de réaliser un dispositif intermédiaire 92 à n sorties.

Dans le mode de réalisation de la figure 6, un compteur 10 analogue aux compteurs des figures 1 à 3 envoie des informations de gestion dans une trame TIC₀ au dispositif intermédiaire 92.

Les informations de gestion TIC₀ sont reçues par un premier dispositif intermédiaire 94, qui a une première voie de sortie prioritaire, à laquelle est connecté un dispositif de délestage 96 et une deuxième voie de sortie non prioritaire, sur laquelle le dispositif 94 envoie des informations de gestion modifiées TIC₁ à un autre dispositif intermédiaire 98.

De manière analogue, le dispositif intermédiaire 98 envoie les informations de gestion TIC₁ sur une première voie de sortie prioritaire à laquelle est connecté un dispositif de délestage 100 et des informations de gestion TIC₂ non prioritaires à un dispositif intermédiaire suivant, et ainsi de suite.

L'avant dernier dispositif intermédiaire 102 envoie les informations de gestion TICₙ₋₂ à un dispositif de délestage 104 sur une première voie de sortie prioritaire et des informations de gestion TICₙ₋₁ à un dispositif intermédiaire 106 sur une deuxième voie de sortie.

Enfin, le nième dispositif intermédiaire 106 envoie des informations de gestion TICₙ₋₁ non modifiées à un dispositif de délestage 108 sur une première voie de sortie et des informations de gestion TICₙ modifiées à un dispositif de délestage 110 sur une deuxième voie de sortie.

Dans ce mode de réalisation, chaque dispositif intermédiaire a deux sorties, et les niveaux de priorité sont attribuées aux voies de sortie de manière figée, afin d'éviter une trop grande complexité dans la gestion des attributions des priorités.

Chacun des dispositifs intermédiaires met en oeuvre une modification des informations de gestion à destination de la voie non prioritaire, comme explicité en référence à la figure 4. De plus, les seuils αᵢ et βᵢ sont choisis pour chaque dispositif intermédiaire de manière à ce que le dernier dispositif de délestage, référence 110 à la figure 6, puisse fonctionner de manière stable sans être en délestage permanent.

La figure 7 illustre les principales étapes d'un procédé de gestion d'énergie selon un mode de réalisation de l'invention, mis en oeuvre par un dispositif intermédiaire apte à transmettre des informations de gestion sur n voies de sortie, ayant des niveaux de priorités associés.

Ces étapes de procédé peuvent être mises en oeuvre par un processeur intégré dans un dispositif intermédiaire à une entrée et n sorties.

Des informations de gestion IG, selon le protocole de télé-information client TIC, sont obtenues en entrée, en provenance d'un compteur électrique comme décrit précédemment.

Le procédé comprend une première étape 120 de réception et de décodage de la ou des trames des d'informations de gestion reçues, ainsi que de la valeur d'intensité instantanée Iᵢₙₛₜ, afin d'extraire les informations de type ADPS relatives au délestage, TIC₁.

Les informations TIC₁ sont mémorisées sans modification comme informations de gestion de sortie destinées à la voie de sortie de priorité maximale.

Les informations TIC₁ sont également traitées dans une étape de calcul 122 pour générer une information de gestion modifiée de niveau de priorité 2 immédiatement inférieur au niveau de priorité 1. L'étape 122 génère une information de gestion modifiée TIC₂ en appliquant le procédé décrit en référence à la figure 4.

Le procédé se poursuit ainsi avec des étapes 124 analogues à l'étape 122 de génération d'informations de gestion modifiées TICₙ₋₁ destinées à une sortie de niveaux de priorité n-1 à partir d'informations de gestions TICₙ₋₂ et de la valeur de Iₛₙₚ calculée à l'étape précédente. Enfin, une dernière étape 126 met en oeuvre la génération d'informations de gestion TICₙ de priorité n, qui est le niveau de priorité le plus faible.

Les trames TIC₁ à TICₙ étant mémorisées suite à leur génération, et une étape 130 met en oeuvre une assignation des trames TICᵢ générées en fonction des différents niveaux de priorités affectés aux sorties, qui peuvent, comme expliqué ci-dessus, évoluer au cours d'une journée. Ainsi, le procédé permet d'assigner dynamiquement des niveaux de priorité et des informations de gestion d'énergie associées aux n sorties d'un dispositif intermédiaire.

Comme indiqué précédemment en référence à la figure 6, les seuils αᵢ et βᵢ sont choisis pour chaque étape de manière à ce que la sortie de priorité n, donc la sortie la moins prioritaire ne soit pas délestée en permanence et puisse fonctionner de manière stable.

Avantageusement, l'invention permet d'attribuer des niveaux de priorité à un nombre n de voies de sortie, permettant ainsi de fournir un seul dispositif intermédiaire apte à gérer un nombre quelconque de dispositifs de délestage et/ou charges.

## Revendications

1. Dispositif intermédiaire de gestion d'énergie, apte à être ajouté dans une installation électrique (1, 40, 50) comportant un compteur électrique (10) et au moins un dispositif de délestage (12, 14) apte à délivrer des ordres de délestage à des appareils électriques de ladite installation selon des informations de gestion obtenues à partir du compteur électrique, **caractérisé en ce qu'**il comporte :
- un moyen (24) d'obtention d'informations de gestion entrantes conformes à un format d'informations prédéterminé à partir du compteur électrique (10),
- au moins deux voies de sortie (26, 28), au moins une des voies de sortie étant apte à être connectée à un dispositif de délestage (12, 14), au moins une autre des voies de sortie étant apte à être connectée soit à un autre dispositif de délestage, soit à un appareil électrique apte à recevoir des ordres de délestage, soit à un autre dispositif intermédiaire (98,102,106) de gestion d'énergie, chaque voie de sortie ayant un niveau de priorité associé,
- un moyen de génération d'informations de gestion de sortie associées respectivement à chaque voie de sortie, à partir des informations de gestion entrantes et des niveaux de priorité associés, lesdites informations de gestion de sortie étant conformes au même format prédéterminé,
le dispositif intermédiaire comportant, lorsqu'une des voies de sortie est apte à être connectée à un appareil électrique, des moyens de génération d'au moins un ordre de délestage à partir desdites informations de gestion de sortie associées à ladite voie de sortie connectée directement à un appareil électrique et des moyens d'envoi dudit au moins un ordre de délestage généré.

2. Dispositif intermédiaire de gestion d'énergie selon la revendication 1, **caractérisé en ce qu'**il comporte en outre des moyens (32) d'attribution de niveaux de priorité auxdites voies de sortie.

3. Dispositif intermédiaire de gestion d'énergie selon la revendication 2, **caractérisé en ce que** lesdits moyens (32) d'attribution de niveaux de priorité sont pilotables à distance par un utilisateur.

4. Dispositif intermédiaire de gestion d'énergie selon la revendication 1, **caractérisé en ce qu'**il comporte un nombre n supérieur à deux de voies de sortie, chacune des voies de sortie ayant un niveau de priorité prédéterminé.

5. Dispositif intermédiaire de gestion d'énergie selon l'une des revendications précédentes, **caractérisé en ce qu'**il comporte au moins deux voies de sortie aptes à être connectées à des dispositifs de délestage.

6. Dispositif intermédiaire de gestion d'énergie selon la revendication 4, **caractérisé en ce qu'**il comporte une pluralité d'autres dispositifs intermédiaires (94, 98, 102), chacun des autres dispositifs intermédiaires (94, 98, 102) de ladite pluralité ayant une première voie de sortie apte à être connectée à un dispositif de délestage (96, 100, 104), et une deuxième voie de sortie connectée à un autre dispositif intermédiaire (98, 102, 106) de ladite pluralité de dispositifs intermédiaires.

7. Procédé de gestion d'énergie, mis en oeuvre par un dispositif intermédiaire de gestion d'énergie selon l'une des revendications 1 à 6 comportant au moins deux voies de sortie, ayant chacune un niveau de priorité associé, **caractérisé en ce qu'**il comporte les étapes de :
- réception d'informations de gestion destinées à une première voie de sortie d'un premier niveau de priorité,
- génération à partir des informations de gestion reçues d'une information de gestion modifiée destinée à une deuxième voie de sortie ayant un deuxième niveau de priorité inférieur audit premier niveau de priorité, comprenant une information apte à déclencher un délestage d'un appareil électrique connecté, via un dispositif de délestage ou directement, sur ladite deuxième voie de sortie, avant tout délestage d'un appareil électrique connecté à ladite première voie de sortie.

8. Procédé de gestion d'énergie selon la revendication 7, **caractérisé en ce qu'**il comporte les étapes de :
- mémorisation de ladite information de gestion modifiée destinée à une deuxième voie de sortie ayant un deuxième niveau de priorité, et
- génération d'une autre information de gestion modifiée à partir de ladite information de gestion mémorisée destinée à une troisième voie de sortie de troisième niveau de priorité inférieur audit deuxième niveau de priorité.

9. Procédé de gestion d'énergie selon la revendication 8, **caractérisé en ce qu'**il comporte une étape (130) d'affectation d'une information de gestion de sortie à chaque voie de sortie du dispositif gestionnaire d'énergie.

10. Procédé de gestion d'énergie selon l'une des revendications 7 à 9, **caractérisé en ce qu'**il comporte les étapes de :
- obtention, à partir des informations de gestion reçues, d'une information relative à une valeur d'intensité instantanée consommée,
- comparaison de ladite valeur d'intensité instantanée à une première valeur de seuil, et
- si la valeur d'intensité instantanée dépasse ladite première valeur de seuil, génération d'une information de gestion modifiée destinée à une voie de sortie non prioritaire.

11. Procédé de gestion d'énergie selon la revendication 10, **caractérisé en ce qu'**il comporte en outre les étapes de :
- comparaison de ladite valeur d'intensité instantanée à une deuxième valeur de seuil, et
- si la valeur d'intensité instantanée est inférieure à ladite deuxième valeur de seuil, modification d'une valeur d'intensité allouée à la voie de sortie non prioritaire.

12. Installation électrique, comportant un compteur électrique et au moins un dispositif de délestage apte à délivrer des ordres de délestage à des appareils électriques de ladite installation selon des informations de gestion obtenues à partir du compteur électrique, **caractérisée en ce qu'**elle comporte un dispositif intermédiaire de gestion d'énergie conforme à l'une des revendications 1 à 6 branché en série entre le compteur électrique et ledit au moins un dispositif de délestage.

## Patentansprüche

1. Zwischenvorrichtung zum Energiemanagement, die einer elektrischen Anlage (1, 40, 50) hinzugefügt werden kann, die einen Stromzähler (10) und mindestens eine Entlastungsvorrichtung (12, 14) umfasst, die in der Lage ist, elektrischen Geräten der Anlage entsprechend Managementinformationen, die ausgehend vom Stromzähler erhalten werden, Entlastungsbefehle zu erteilen, **dadurch gekennzeichnet, dass** sie umfasst:
- eine Einrichtung (24) zum Erlangen von einem vorbestimmten Informationsformat entsprechenden Eingangsmanagementinformationen ausgehend vom Stromzähler (10),
- mindestens zwei Ausgangskanäle (26, 28), wobei mindestens einer der Ausgangskanäle an eine Entlastungsvorrichtung (12, 14) angeschlossen werden kann, wobei mindestens ein anderer der Ausgangskanäle entweder an eine andere Entlastungsvorrichtung oder an ein elektrisches Gerät, das Entlastungsbefehle empfangen kann, oder an eine andere Zwischenvorrichtung (98, 102, 106) zum Energiemanagement angeschlossen werden kann, wobei jeder Ausgangskanal eine zugeordnete Prioritätsstufe hat,
- eine Einrichtung zum Generieren von jeweils jedem Ausgangskanal zugeordneten Ausgangsmanagementinformationen ausgehend von den Eingangsmanagementinformationen und den zugeordneten Prioritätsstufen, wobei die Ausgangsmanagementinformationen demselben vorbestimmten Format entsprechen,
wobei die Zwischenvorrichtung, wenn einer der Ausgangskanäle an ein elektrisches Gerät angeschlossen werden kann, Einrichtungen zum Generieren mindestens eines Entlastungsbefehls ausgehend von den Ausgangsmanagementinformationen, die dem direkt an ein elektrisches Gerät angeschlossenen Ausgangskanal zugeordnet sind, und Einrichtungen zum Verschicken des mindestens einen generierten Entlastungsbefehls umfasst.

2. Zwischenvorrichtung zum Energiemanagement nach Anspruch 1, **dadurch gekennzeichnet, dass** sie darüber hinaus Einrichtungen (32) umfasst, um den Ausgangskanälen Prioritätsstufen zuzuteilen.

3. Zwischenvorrichtung zum Energiemanagement nach Anspruch 2, **dadurch gekennzeichnet, dass** die Einrichtungen (32) zum Zuteilen von Prioritätsstufen durch einen Nutzer ferngesteuert werden können.

4. Zwischenvorrichtung zum Energiemanagement nach Anspruch 1, **dadurch gekennzeichnet, dass** sie eine Anzahl n, die höher als zwei ist, an Ausgangskanälen umfasst, wobei jeder Ausgangskanal eine vorbestimmte Prioritätsstufe hat.

5. Zwischenvorrichtung zum Energiemanagement nach einem der vorhergehenden Ansprüche, **dadurch gekennzeichnet, dass** sie mindestens zwei Ausgangskanäle umfasst, die an Entlastungsvorrichtungen angeschlossen werden können.

6. Zwischenvorrichtung zum Energiemanagement nach Anspruch 4, **dadurch gekennzeichnet, dass** sie mehrere weitere Zwischenvorrichtungen (94, 98, 102) umfasst, wobei jede der weiteren Zwischenvorrichtungen (94, 98, 102) der Mehrzahl einen ersten Ausgangskanal, der an eine Entlastungsvorrichtung (96, 100, 104) angeschlossen werden kann, und einen zweiten Ausgangskanal hat, der an eine weitere Zwischenvorrichtungen (98, 102, 106) der mehreren Zwischenvorrichtungen angeschlossen werden kann.

7. Verfahren zum Energiemanagement, das mittels einer Zwischenvorrichtung zum Energiemanagement nach einem der Ansprüche 1 bis 6 umgesetzt wird, die mindestens zwei Ausgangskanäle umfasst, die jeweils eine zugeordnete Prioritätsstufe haben, **dadurch gekennzeichnet, dass** es die Schritte umfasst:
- Empfangen von Managementinformationen, die für einen ersten Ausgangskanal mit einer ersten Prioritätsstufe bestimmt sind,
- Generieren, und zwar ausgehend von den empfangenen Managementinformationen, einer modifizierten Managementinformation, die für einen zweiten Ausgangskanal mit einer zweiten Prioritätsstufe bestimmt ist, die niedriger ist als die erste Prioritätsstufe, eine Information umfassend, die eine Entlastung eines elektrischen Geräts, das über eine Entlastungsvorrichtung oder direkt an den zweiten Ausgangskanal angeschlossen ist, vor jeglicher Entlastung eines an den ersten Ausgangskanal angeschlossenen elektrischen Geräts auslösen kann.

8. Verfahren zum Energiemanagement nach Anspruch 7, **dadurch gekennzeichnet, dass** es die Schritte umfasst:
- Speichern der modifizierten Managementinformation, die für einen zweiten Ausgangskanal mit einer zweiten Prioritätsstufe bestimmt ist, und
- Generieren einer weiteren modifizierten Managementinformation ausgehend von der gespeicherten Managementinformation, die für einen dritten Ausgangskanal mit einer dritten Prioritätsstufe bestimmt ist, die niedriger ist als die zweite Prioritätsstufe.

9. Verfahren zum Energiemanagement nach Anspruch 8, **dadurch gekennzeichnet, dass** es einen Schritt (130) umfasst, um jedem Ausgangskanal der Energiemanagementvorrichtung eine Ausgangsmanagementinformation zuzuteilen.

10. Verfahren zum Energiemanagement nach einem der Ansprüche 7 bis 9, **dadurch gekennzeichnet, dass** es die Schritte umfasst:
- Erlangen, und zwar ausgehend von den empfangenen Managementinformationen, einer Information in Bezug auf einen Wert einer aktuell verbrauchten Stromstärke,
- Vergleichen des Werts der aktuellen Stromstärke mit einem ersten Schwellenwert, und
- wenn der Wert der aktuellen Stromstärke den ersten Schwellenwert übersteigt, Generieren einer modifizierten Managementinformation, die für einen Ausgangskanal ohne Priorität bestimmt ist.

11. Verfahren zum Energiemanagement nach Anspruch 10, **dadurch gekennzeichnet, dass** es darüber hinaus die Schritte umfasst:
- Vergleichen des Werts der aktuellen Stromstärke mit einem zweiten Schwellenwert, und
- wenn der Wert der aktuellen Stromstärke niedriger ist als der zweite Schwellenwert, Modifizieren eines dem Ausgangskanal ohne Priorität zugeteilten Werts der Stromstärke.

12. Elektrische Anlage, die einen Stromzähler und mindestens eine Entlastungsvorrichtung umfasst, die in der Lage ist, elektrischen Geräten der Anlage entsprechend Managementinformationen, die ausgehend vom Stromzähler erhalten werden, Entlastungsbefehle zu erteilen, **dadurch gekennzeichnet, dass** sie eine Zwischenvorrichtung zum Energiemanagement nach einem der Ansprüche 1 bis 6 umfasst, die zwischen dem Stromzähler und der mindestens einen Entlastungsvorrichtung in Reihe geschaltet ist.

## Claims

1. An intermediate energy management device, adapted to be added in an electrical installation (1, 40, 50) including an electric meter (10) and at least one load shedding device (12, 14) capable of delivering load shedding orders to electrical appliances of said installation based on management information obtained from the electric meter, **characterized in that** it comprises:
- means (24) for obtaining incoming management information from the electric meter (10) in a predetermined information format,
- at least two output channels (26, 28), at least one of the output channels being able to be connected to a load shedding device (12, 14), at least another of the output channels being able to be connected either to another load shedding device, or to an electrical appliance able to receive load shedding orders, or to another intermediate energy management device (98, 102, 106), each output channel having an associated priority level,
- means for generating output management information respectively associated with each output channel, from incoming management information and associated priority levels, said output management information being in accordance with the same predetermined format,
the intermediate device comprising, when one of the output channels is able to be connected to an electrical appliance, means for generating at least one load shedding order from said output management information associated with said output connected directly to an electrical appliance and means for sending the at least one generated load shedding order.

2. The intermediate energy management device according to claim 1, **characterized in that** it further includes means (32) for assigning priority levels to said output channels.

3. The intermediate energy management device according to claim 2, **characterized in that** said means (32) for assigning priority levels can be controlled remotely by a user.

4. The intermediate energy management device according to claim 1, **characterized in that** it includes a number n of output channels greater than two, each of the output channels having a predetermined priority level.

5. The intermediate energy management device according to one of the preceding claims, **characterized in that** it includes at least two output channels that can be connected to load shedding devices.

6. The intermediate energy management device according to claim 4, **characterized in that** it includes a plurality of other intermediate devices (94, 98, 102), each other intermediate device (94, 98, 102) from said plurality of intermediate devices having a first output channel able to be connected to a load shedding device (96, 100, 104) and a second output channel connected to another intermediate device (94, 98, 102) from said plurality of intermediate devices.

7. An energy management method, implemented by an intermediate energy management device according to one of claims 1 to 6, including at least two output channels, each having an associated priority level, **characterized in that** it includes the following steps:
- receiving management information intended for a first output channel with a first priority level,
- generating, from the received management information, modified management information intended for a second output channel having a second priority level lower than said first priority level, comprising information able to activate load shedding of an electrical appliance connected, via a load shedding device or directly, on said second output channel, before any load shedding of an electrical device connected to said first output channel.

8. The energy management method according to claim 7, **characterized in that** it includes the following steps:
- storing said modified management information intended for a second output channel having a second priority level, and
- generating another piece of modified management information from said stored management information that is intended for a third output channel with a third priority level lower than said second priority level.

9. The energy management method according to claim 8, **characterized in that** it includes a step (130) of assigning output management information to each output channel of the energy management device.

10. The energy management method according to one of claims 7 to 9, **characterized in that** it includes the following steps:
- obtaining, from the received management information, information relative to an instantaneous consumed intensity value,
- comparing said instantaneous intensity value to a first threshold value, and
- if the instantaneous intensity value exceeds said first threshold value, generating modified management information intended for a non-priority output channel.

11. The energy management method according to claim 10, **characterized in that** it further includes the following steps:
- comparing said instantaneous intensity value to a second threshold value, and
- if the instantaneous intensity value is lower than said second threshold value, modifying an intensity value allocated to the non-priority output channel.

12. An electrical installation including an electric meter and at least one load shedding device capable of delivering load shedding orders to electrical appliances of said installation based on management information obtained from the electric meter, **characterized in that** it includes an intermediate energy management device according to one of claims 1 to 6, connected serially between the electric meter and said at least one load shedding device.
